Europäisches Patentamt

European Patent Office

Office européen des brevets

(11)    EP 0 771 115 A1

(19)

(12)    DEMANDE DE BREVET EUROPEEN

(43) Date de publication:
       02.05.1997  Bulletin 1997/18

(51) Int. Cl.$^6$: H04N 7/26, H04N 7/36

(21) Numéro de dépôt: 96202884.1

(22) Date de dépôt: 16.10.1996

(84) Etats contractants désignés:
     DE FR GB SE

(30) Priorité: 25.10.1995 EP 95402388
              03.04.1996 FR 9604194

(71) Demandeur: PHILIPS ELECTRONICS N.V.
     5621 BA  Eindhoven (NL)

(72) Inventeur: Jeannin, Sylvie,
     Société Civile S.P.I.D.
     75008 Paris (FR)

(74) Mandataire: Landousy, Christian
     Société Civile S.P.I.D.
     156, Boulevard Haussmann
     75008 Paris (FR)

(54)    Procédé et dispositif d'estimation de mouvement de régions entre images et système de codage d'images segmentées pour leur mise en oeuvre

(57)    Procédé et dispositif d'estimation de mouvement entre images segmentées, ou partitions, composées d'un nombre I de régions $R_i$. Ce dispositif comprend, pour la mise en oeuvre du procédé, un étage (41) d'initialisation des paramètres qui décrivent le mouvement de chaque région $R_i$, dans lequel, parmi différentes hypothèses de mouvement choisies a priori, l'une d'elles est sélectionnée après prédiction, calcul d'erreur de prédiction, et sélection de l'hypothèse de mouvement à laquelle correspond la plus faible des erreurs de prédiction. Cet étage (41) est suivi d'un étage (42) de traitement intermédiaire par filtrage, puis d'un étage (43) de raffinement des paramètres de mouvement, rebouclé vers l'entrée de l'étage (42) pour un fonctionnement itératif jusqu'à arrêt sur un critère déterminé, pour l'obtention finale de I information de mouvement $M_i(t)$ correspondant aux régions $R_i$.
Application : système de codage d'images segmentées avec fusions successives éventuelles de leurs régions en fonction du mouvement estimé.

FIG.4

Printed by Rank Xerox (UK) Business Services
2.14.4/3.4

## Description

La présente invention concerne un procédé d'estimation de mouvement entre images formant une séquence P(t-n), P(t-n+1),..., P(t-2), P(t-1), P(t),..., à laquelle correspond une séquence S(t-n), S(t-n+1),..., S(t-2), S(t-1), S(t),..., d'images segmentées ou partitions composées de I régions $R_i$ identifiées par des labels, ainsi qu'un dispositif d'estimation de mouvement correspondant. L'invention concerne également un système de codage d'images segmentées permettant la mise en oeuvre de ces procédé et dispositif.

L'invention est utilisable notamment pour le codage de signaux vidéo dans le domaine des très faibles débits et dans celui des faibles débits, jusqu'à environ 1 Mbit/seconde. Cette gamme de débits correspond notamment aux applications dites grand public, souvent regroupées sous le terme de multimédia.

Depuis dix à quinze ans, la compression d'images fixes ou animées est devenue un enjeu technologique industriel majeur, gagnant progressivement de nombreux secteurs : télévision numérique, stockage informatique, télésurveillance, visiophonie. Cependant d'autres applications apparaissent à l'heure actuelle, comme par exemple les applications multimédia sur réseau local informatique, la transmission d'images vers les mobiles, ou la visiophonie sur réseau téléphonique commuté, constituant autant de nouveaux défis. Ces applications, opérant sur des médias au coût plus faible en raison de leur bande passante réduite, nécessitent en effet, à qualité d'image égale, d'atteindre des taux de compression bien supérieurs à ceux pratiqués dans le cadre des grandes normes de codage d'images que sont H261, JPEG, MPEG1 ou MPEG2. En outre, les services qui seront proposés sur ces médias devront permettre aux usagers d'interagir avec le contenu des images vidéo, c'est-à-dire d'avoir un accès direct aux différents objets qui les composent, afin de les manipuler. Plusieurs procédés susceptibles de répondre à ces impératifs de taux de compression et d'interactivité s'affronteront certainement dans le cadre des travaux de normalisation du codage d'images actuellement menés par le comité MPEG (Moving Picture Experts Group) de l'ISO (Organisation Internationale de Standardisation) pour finaliser vers 1998 le futur standard MPEG4.

Quel que soit le procédé qui sera alors retenu, la nécessité de comprimer des images animées rend incontournable de disposer de méthodes efficaces de compensation des mouvements intervenant dans ces images et donc d'estimation préalable de ces mêmes mouvements. D'autre part, la nécessité de pouvoir interagir avec le contenu des images demande de disposer d'une représentation dite "objet" des mouvements des différents éléments de chacune de ces images.

Dans une séquence d'images, une méthode classique d'estimation du mouvement entre deux de ces images (dites antérieure et postérieure) consiste à subdiviser chacune d'elles en un réseau bidimensionnel de blocs élémentaires adjacents d'égales dimensions et à faire appel au procédé dit de correspondance par blocs, qu'on appelle BMA -de "Block Matching Algorithm"- dans la suite de la description, et qui est décrit par exemple dans l'article "A VLSI architecture for hierarchical motion estimation", paru dans la revue "IEEE Transactions on Consumer Electronics", vol. 41, n° 2, mai 1995, pp. 248-257). Cette technique suppose que les blocs sont suffisamment petits (composés par exemple de 16 x 16 points d'image, ou pixels, sans que cet exemple soit limitatif) pour que les mouvements de chacun d'eux d'une image à l'autre puissent être considérés comme de simples translations parallèles au plan de l'image, tous les pixels d'un bloc étant alors supposés avoir le même mouvement. Un bloc de l'image postérieure peut donc, de ce fait, être comparé aux blocs occupant dans l'image antérieure la même position ou des positions voisines délimitées par une fenêtre de recherche, de façon à sélectionner, parmi ces blocs antérieurs en nombre bien délimité, celui qui ressemble le plus au bloc de référence de l'image postérieure. La position relative du bloc sélectionné et du bloc de référence définit un vecteur de mouvement indiquant quelle est la translation qui permet de passer d'un bloc à l'autre, entre l'image antérieure et l'image postérieure.

Ces opérations de comparaison, répétées pour tous les blocs de l'image postérieure permettent d'associer à celle-ci un champ de vecteurs de mouvement. Lorsqu'on veut ensuite coder puis transmettre et/ou stocker les informations correspondant aux pixels d'un bloc, il suffit, en fait, de coder puis transmettre et/ou stocker, à la place de celles-ci, les vecteurs de mouvement qui leur correspondent : ces vecteurs permettent, à partir du bloc sélectionné dans l'image antérieure, de connaître après son déplacement sa nouvelle position dans l'image postérieure considérée.

Cependant, cette technique, bien que susceptible de fonctionner également dans le cas des applications citées, présente alors l'inconvénient suivant, à savoir que les images sont appréhendées comme des signaux bidimensionnels, sans que le contenu effectif de celles-ci soit pris en compte : les contours des blocs élémentaires et ceux des objets réellement présents dans les scènes n'ont en effet normalement aucune raison de coïncider. Le traitement par blocs conduit alors à des dégradations d'images, par exemple lorsque la frontière entre deux objets d'une image, mobiles chacun d'une façon distincte, passe au milieu d'un bloc. En effet, dans ce cas, l'estimation de mouvement n'est plus fiable et les images restituées sont de qualité médiocre. Lorsqu'au contraire une région de grande surface, au mouvement homogène, contient de nombreux blocs à chacun desquels est associée une même information de mouvement, l'excessive redondance d'informations qui en résulte est également nuisible à l'efficacité du cbdage.

Par ailleurs, il faut noter que les mouvements intervenus d'une image à une autre peuvent être de nature très différente. Au mouvement local des objets, qui peut dans d'assez nombreux cas être assimilé à une translation, se superposent souvent des mouvements de la caméra de prise de vues, tels que zoom (mouvement à focale fixe ou variable le long d'un axe perpendiculaire ou transversal au plan des images) et panoramique (mouvement de rotation, selon un angle assez faible, autour d'un axe sensiblement parallèle au plan des images). Si l'analyse locale du mouvement a conduit par exemple à la détermination d'un champ de vecteurs de mouvement décrivant de façon satisfaisante les translations des blocs d'image d'une image à une autre, ces mouvements globaux de zoom et/ou de panoramique dispersent le champ de vecteurs. Une analyse globale des mouvements doit donc être simultanément effectuée, mais le nombre des paramètres qui décrivent l'ensemble de ces mouvements devient rapidement important.

Ces limitations de la méthode BMA de correspondance par blocs ont conduit, pour les applications visées, à développer d'autres techniques orientées vers une analyse spécifique de l'image et une meilleure compréhension de sa structure. Cette analyse consiste à considérer une image comme la projection d'une scène tridimensionnelle contenant des objets fixes et animés et à tenter d'identifier dans chaque image ces différents objets, puis à estimer des paramètres qui en sont représentatifs (qui sont liés par exemple à leurs formes, leurs couleurs, leurs textures, leurs mouvements, etc...), c'est-à-dire, d'une manière plus générale, à définir une segmentation des images en régions $R_i$ bien individualisées et homogènes relativement à un critère déterminé.

Le document "Region-based motion analysis for video coding at low bitrates", de H. Sanson, CCETT, pp.1-8, publié par l'ISO sous la référence ISO/IEC-JTTC1/SC29/WG11/MPEG94 en mars 1994, décrit une méthode permettant de réaliser conjointement une segmentation des images d'une séquence vidéo en régions homogènes en matière de mouvement et une estimation satisfaisante des paramètres décrivant les mouvements dans ces régions. Cette méthode ne semble cependant appropriée que dans le cas des situations dans lesquelles aucune information relativement au contenu des images n'est disponible.

Un premier but de l'invention est de proposer un procédé d'estimation de mouvement reposant au contraire sur une connaissance préalable de ce contenu des images, obtenue lors d'une étape d'analyse ayant conduit à leur segmentation.

A cet effet l'invention concerne un procédé d'estimation de mouvement entre images telles que définies précédemment, comprenant successivement, pour délivrer par région $R_i$ et sous la forme d'un vecteur de mouvement défini par des paramètres de mouvement une information $M_i(t)$ représentative du mouvement de l'image courante P(t) par rapport à une image précédente P(t-1), les trois opérations suivantes, effectuées chacune pour chaque région de l'image courante :

(1) une première étape d'initialisation des paramètres de mouvement de chacune des régions $R_i$ de l'image courante P(t), en fonction des images avant segmentation P(t-1) et P(t), des images segmentées S(t-1) et S(t), et de l'information de mouvement $M_i(t-1)$ estimée pour la précédente image courante P(t-1) par une précédente mise en oeuvre du procédé ;

(2) une deuxième étape de traitement intermédiaire des images sur lesquelles est effectuée l'estimation de mouvement et des paramètres de ce mouvement, et une troisième étape de raffinement de paramètres de mouvement, pour la détermination définitive, pour tous les points d'images de chacune desdites régions $R_i$, desdits paramètres sous la forme d'un vecteur (Dx, Dy) tel que, pour tout point de coordonnées (x,y) de la région, L(x,y,t) = L(x-Dx, y-Dy, t-1), L(.) désignant la luminance ou un signal vidéo plus complexe tel qu'une combinaison des signaux de luminance et de chrominance, et Dx, Dy étant des polynômes de degré lié au type de mouvement de la région ;

(3) la reprise itérative desdites deuxième et troisième étapes de traitement intermédiaire et de raffinement, jusqu'à arrêt de ce processus itératif en fonction d'au moins un critère déterminé, pour disposer finalement de l informations de mouvement $M_i(t)$.

Le procédé d'estimation de mouvement ainsi proposé est avantageux à plusieurs titres. D'une part le temps d'exécution nécessaire pour atteindre une qualité d'estimation donnée est en moyenne moindre si le processus d'estimation démarre sur des valeurs plus proches de celles constituant le résultat définitif de l'estimation, et le temps supplémentaire nécessaire pour effectuer cette étape d'initialisation est négligeable par rapport à celui de l'estimation elle-même. Par ailleurs, cette initialisation accélère la convergence du processus itératif proposé, puisque la méthode d'estimation est supposée ne prévoir que de petites variations relatives des paramètres de mouvement.

Selon une particularité avantageuse de l'invention, ladite première étape d'initialisation des paramètres de mouvement comprend les sous-étapes suivantes :

(A) une première sous-étape de définition d'hypothèses de mouvement pour chaque région $R_i$ considérée ;

(B) une deuxième sous-étape de prédiction, à partir de l'image P(t-1), de la région correspondant à chaque région $R_i$ dans l'image P(t) compte tenu de chacune des hypothèses de mouvement précédentes, et de calcul des erreurs de prédiction correspondantes ;

(C) une troisième sous-étape de comparaison desdites erreurs de prédiction calculées pour chaque région $R_i$ considérée et de sélection, comme mouvement initial de cette région, de celle des hypothèses de mouvement à laquelle correspond la plus faible des erreurs de prédiction.

Par ailleurs, dans un mode de mise en oeuvre préférentiel, ladite deuxième étape de traitement intermédiaire comprend un prétraitement de filtrage à l'aide d'un filtre gaussien isotropique, tandis que ladite troisième étape de raffinement comprend, pour la détermination du vecteur Dx, Dy attaché à chaque région $R_i$ considérée, une opération de minimisation de la somme des carrés des erreurs de prédiction sur les points d'image de ladite région $R_i$ ou sur un sous-ensemble de ces points, cette somme étant notée :

$\sum_{(x,y)} (L(x,y,t) - L(x-Dx, y-Dy, t-1))^2$ , ladite minimisation étant par exemple effectuée par la méthode approchée dite de Gauss-Newton, en effectuant un développement limité au premier ordre de ladite somme après remplacement de Dx et Dy par $(Dx_o + dx)$ et $(Dy_o + dy)$ respectivement, en annulant les dérivées dudit développement limité par rapport à chacun des coefficients de dx et de dy, et en retenant comme valeurs des variations des paramètres de mouvement menant à la plus petite erreur quadratique les solutions de l'ensemble de n équations à n inconnues obtenu à la suite de ces opérations.

Enfin, dans une variante de mise en oeuvre de ce procédé, il peut être prévu, à la suite desdites trois opérations d'initialisation, de traitement intermédiaire et de raffinement, une opération supplémentaire dite de propagation contrôlée vers les régions voisines de chaque région $R_i$, selon laquelle sont reprises, pour chacune desdites régions $R_i$ :

(a) d'une part une nouvelle sous-étape de prédiction, à partir de l'image P(t-1), de chacune desdites régions voisines dans l'image P(t) compte tenu d'une hypothèse de mouvement, dans ces régions, correspondant à celle qui est associée aux paramètres de mouvement résultant de ladite détermination définitive, et de calcul de l'erreur de prédiction additionnelle correspondante ;

(b) d'autre part une sous-étape de comparaison de ladite erreur de prédiction additionnelle et de l'erreur de prédiction associée à l'hypothèse de mouvement retenue comme mouvement initial de la région voisine considérée et de sélection, comme mouvement de chacune desdites régions voisines, de celui auquel correspond la plus faible de ces deux erreurs de prédiction.

Un autre but de l'invention est de proposer un dispositif d'estimation de mouvement permettant la mise en oeuvre de ce procédé.

A cet effet l'invention concerne un dispositif d'estimation de mouvement entre images formant une séquence P(t-n), P(t-n+1),..., P(t-2), P(t-1), P(t),..., à laquelle correspond une séquence S(t-n), S(t-n+1),..., S(t-2), S(t-1), S(t),..., d'images segmentées ou partitions composées de I régions $R_i$ identifiées par des labels, caractérisé en ce qu'il comprend successivement, pour délivrer par région $R_i$ et sous la forme d'un vecteur de mouvement défini par des paramètres de mouvement une information $M_i(t)$ représentative du mouvement de l'image courante P(t) par rapport à une image précédente P(t-1), les trois étages suivants, à savoir un premier étage d'initialisation des paramètres de mouvement de chaque région de l'image courante, par sélection d'hypothèses de mouvement et choix, pour chaque région, de celui des mouvements pour lequel la somme des carrés des erreurs de prédiction sur les points d'image de la région est minimale, un deuxième étage de traitement intermédiaire, et un troisième étage de raffinement des paramètres de mouvement par détermination approchée du vecteur (Dx, Dy) attaché à chaque région, lesdits deuxième et troisième étages étant organisés en boucle selon un processus itératif jusqu'à arrêt de celui-ci en fonction d'un critère déterminé.

Un autre but de l'invention est enfin de proposer un système de codage permettant la mise en oeuvre du procédé et de ce dispositif d'estimation de mouvement dans un système de codage d'images segmentées.

A cet effet l'invention concerne un système de codage d'images segmentées, ou partitions, correspondant à une séquence d'images initiales et déterminant dans lesdites images des contours et des régions délimitées par ceux-ci et identifiées par des labels associés, ledit système comprenant des moyens pour engendrer, pour chaque partition successive dite partition courante, des signaux codés correspondant à une partition dite optimale et composée soit de régions extraites d'une partition dite principale et déterminée directement par estimation et compensation de mouvement d'une partition précédant ladite partition courante, soit de régions extraites de partitions additionnelles créées par fusion ou au contraire par re-segmentation de régions de ladite partition principale, caractérisé en ce qu'il comprend, en vue de ladite fusion éventuelle, au moins un circuit de fusion de régions composé d'un dispositif d'estimation de mouvement tel que défini ci-dessus et d'un dispositif de proposition de fusion des régions concernées.

Les particularités et avantages de l'invention apparaîtront maintenant de façon plus détaillée dans la description qui suit et dans les dessins annexés, donnés à titre d'exemples non limitatifs et dans lesquels :

- la figure 1 montre un exemple d'une image segmentée, ladite segmentation résultant de l'analyse préalable des images d'origine (on notera que le principe même de la segmentation, quel qu'il soit, ne fait pas partie de l'invention) ;
- la figure 2 illustre de façon schématique la représentation d'un mouvement entre deux images successives P(t-1) et P(t) ;
- la figure 3 illustre les étapes du procédé d'estimation selon l'invention, qui est de nature itérative ;
- la figure 4 est un exemple de réalisation d'un dispositif d'estimation de mouvement pour la mise en oeuvre de ce procédé ;

- la figure 5 est un exemple de réalisation, dans un système de codage d'images segmentées, d'une succession de circuits de fusion de régions (ici, deux circuits) comprenant chacun un dispositif d'estimation de mouvement tel que celui de la figure 4 ;
- la figure 6 montre, pour une région, un exemple de repère local, avec une normalisation de coefficient 2 par exemple ;

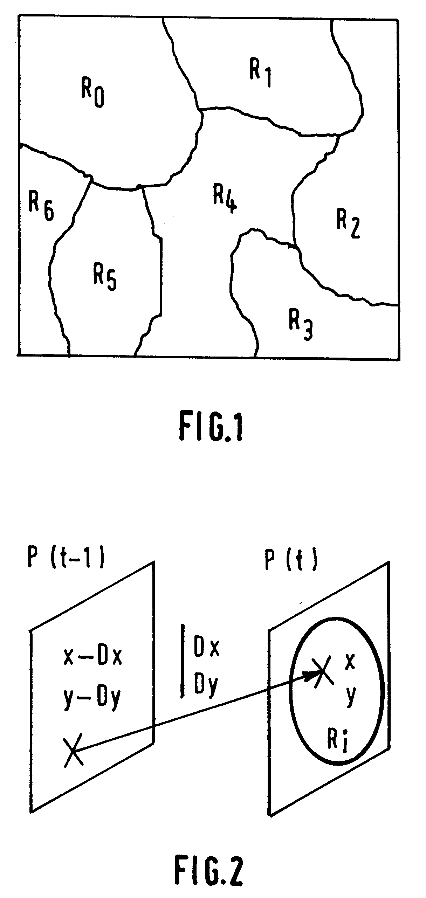

Avant de décrire plus en détail l'invention, on va préciser ci-dessous les différentes notations utilisées, qui seront conservées pendant toute la description. Les images ici considérées font partie d'une séquence d'origine d'images texturées, notées P(t-n), P(t-n+1),..., P(t-2), P(t-1), P(t), et.... Dans la suite de la description, on s'intéresse principalement à P(t), l'image courante, et à P(t-1), qui est l'image originale précédente (ou bien l'image codée précédente, selon les caractéristiques du codage prévu en aval de l'estimation de mouvement). D'un point de vue pratique, ces deux images texturées P(t-1) et P(t) entre lesquelles l'estimation de mouvement va être effectuée à l'instant t sont ici des images du signal de luminance, mais peuvent aussi correspondre soit à une combinaison des signaux de luminance et de chrominance dans le cas où la couleur contient beaucoup d'informations spécifiques, soit encore à toute autre transformée des images d'origine mettant en valeur les informations contenues dans le signal. La valeur de la luminance en un point quelconque $(x, y)$ d'une des images P(t-2), P(t-1), P(t), etc... est notée $L(x, y, t-2)$, $L(x, y, t-1)$, $L(x, y, t)$, etc... En ce qui concerne l'opération de segmentation des images, elle fait correspondre à la séquence des images d'origine une séquence d'images de labels (appelées aussi partitions), et l'on appelle S(t-1), S(t) ces images segmentées, qui correspondent aux images texturées d'origine P(t-1), P(t) et qui forment, en définitive, une séquence d'un certain type d'images résultats d'une analyse préalable nécessaire pour pouvoir mettre en oeuvre le procédé d'estimation de mouvement. La figure 1 illustre un exemple de segmentation d'image en sept régions $R_i$, avec i = 0 à 6.

Les informations relatives au mouvement de l'image courante P(t) par rapport à l'image précédente P(t-1) sont, elles, regroupées sous l'appellation $M_i(t)$ pour la région $R_i$ de l'image P(t). Cette appellation $M_i(t)$ regroupe les données constituées par d'une part le type de mouvement retenu (c'est-à-dire l'ordre, ou le degré, du polynôme représentant ce mouvement) et d'autre part les valeurs des paramètres correspondants (c'est-à-dire les valeurs des coefficients des polynômes). Par exemple, comme l'illustre la figure 2, à un type de mouvement déterminé entre les images P(t-1) et P(t), correspond en un point $(x,y)$ d'une région $R_i$ de P(t) un vecteur de déplacement $(Dx, Dy)$ de P(t-1) vers P(t), Dx et Dy étant des polynômes en x et y dont les coefficients sont les paramètres de mouvement. Cela revient à écrire que $L(x, y, t) = L(x - Dx, y - Dy, t-1)$. Le degré de ces polynômes (0, 1, ou 2) et le nombre des coefficients qui les définissent (de 2 à 12 paramètres) dépendent du type de mouvement considéré :

(a) deux paramètres suffisent à définir la translation d'une facette plane parallèle à l'image dans un plan parallèle à l'image :

$$Dx = a_1$$

$$Dy = a_2$$

(b) pour un mouvement du type zoom et/ou panoramique, quatre paramètres sont nécessaires pour modéliser le mouvement de translation d'une facette plane parallèlement au plan de l'image si la facette est d'orientation quelconque ou un mouvement de translation quelconque de cette facette si elle est parallèle au plan de l'image :

$$Dx = a_1 + a_2 x + a_3 y$$

$$Dy = a_4 - a_3 x + a_2 y$$

(c) pour une transformation affine, six paramètres sont nécessaires pour modéliser un mouvement de translation tel qu'indiqué en (b) ci-dessus ou un mouvement de rotation d'une facette plane autour d'un axe perpendiculaire au plan de l'image :

$$Dx = a_1 + a_2 x + a_3 y$$

$$Dy = a_4 + a_5 x + a_6 y$$

(d) pour un mouvement quadratique, douze paramètres sont nécessaires pour modéliser des rotations et des translations quelconques de facettes courbes :

$$Dx = a_1 + a_2 x + a_3 y + a_4 x^2 + a_5 xy + a_6 y^2$$

$$Dy = a_7 + a_8 x + a_9 y + a_{10} x^2 + a_{11} xy + a_{12} y^2$$

Ces modèles polynomiaux ont été adoptés parce qu'il est possible de montrer qu'ils représentent de façon satisfaisante le mouvement des objets. Ils ne peuvent cependant pas être interprétés comme une description rigoureuse du mouvement tridimensionnel réel de ces objets. Il faudrait pour cela avoir la certitude que les objets sont rigides et, en outre, connaître leur forme, ce qui n'est pas le cas. Les modèles en question sont donc simplement une représentation de la déformation de la projection des objets dans le plan image (par exemple, dans le cas de deux paramètres, le modèle décrit effectivement une translation, mais dans le plan image et en supposant que l'objet concerné est rigide et de surface plane parallèle au plan image). Une présentation détaillée de tels modèles de mouvements est disponible par exemple dans l'article "Differential methods for the identification of 2D and 3D motion models in image sequences", J.L. Dugelay et H. Sanson, Signal Processing : Image Communication, vol.7, n°1, mars 1995, pp.105-127.

Enfin, on précise que les coordonnées d'un point dans une image sont, dans toute la description, notées en majuscules (X,Y) ou en minuscules (x,y) selon qu'elles sont exprimées par rapport à un repère global lié seulement à l'image ou par rapport à un repère local lié à une région déterminée de l'image.

Ces notations étant rappelées, il est utile de rappeler également que l'objectif de l'estimation de mouvement est, ici, de permettre ultérieurement la restitution d'une image prédite R(t) constituant une approximation de P(t), à partir de l'image segmentée S(t), de l'image précédemment restituée R(t-1) correspondant à P(t-1), et des informations $M_i(t)$ obtenues au cours de l'estimation de mouvement. Une telle détermination de R(t) permet entre autres, ensuite, de ne coder que l'erreur de prédiction, c'est-à-dire la différence entre P(t) et R(t).

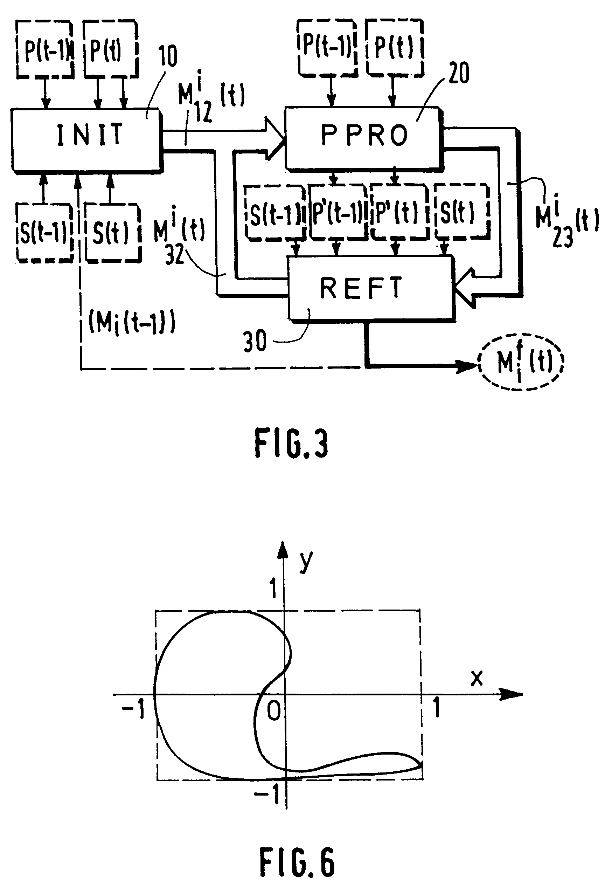

Le procédé selon l'invention peut maintenant être décrit de façon détaillée, en référence à la figure 3. Il comprend successivement une première étape 10 d'initialisation des paramètres de mouvement (INIT), une deuxième étape 20 de prétraitement (PPRO), et une troisième étape 30 de raffinement des paramètres de mouvement (REFT), effectuées chacune pour chaque région de l'image courante.

La première étape 10 d'initialisation des paramètres de mouvement a pour objectif de démarrer le processus d'estimation de mouvement avec, pour chaque région $R_i$ de l'image P(t) considérée, des valeurs des paramètres de mouvement qui soient aussi proches que possible des valeurs réelles finales de ces paramètres, afin de pouvoir supposer, tout au long des traitements ici envisagés, que les variations des paramètres de mouvement sont faibles. En outre, le temps d'exécution nécessaire pour arriver à une qualité d'estimation donnée est en moyenne moindre si l'on démarre le processus d'estimation avec des valeurs de paramètres plus proches des valeurs réelles recherchées, ce temps additionnel d'exécution de ladite première étape d'initialisation étant de toute façon négligeable par rapport à celui de l'estimation elle-même. Enfin, il faut éviter qu'au cours de ces traitements, qui, comme on va le voir, sont effectués de façon itérative, la convergence puisse se produire sur un minimum local, ce qui présenterait davantage de chances de se produire si les valeurs initiales étaient trop éloignées desdites valeurs réelles recherchées.

La première étape va donc, en trois sous-étapes référencées (A), (B) et (C) et mises en oeuvre sur chaque région $R_i$ de l'image P(t) :

(A) exploiter au mieux les informations disponibles initialement en entrée, et éventuellement en ressembler de nouvelles, pour en déduire des hypothèses de mouvement probable ;
(B) pour chacune desdites hypothèses de mouvement (exposées ci-après) et à partir des données connues pour l'image P(t-1), prédire la région concernée dans P(t) et calculer l'erreur de prédiction correspondante ;
(C) sélectionner comme valeurs initiales des paramètres de mouvement celles qui engendrent l'erreur de prédiction la plus faible (ce qui, en même temps, valide l'une des hypothèses de mouvement).

La première sous-étape (A) de l'étape 10 d'initialisation INIT consiste à exploiter les données initiales, qui sont :

(a) les images originales P(t-1) et P(t) ;
(b) les images de labels S(t-1) et S(t) ;
(c) les données $M_i(t-1)$, c'est-à-dire l'information de mouvement (type de mouvement et valeurs de paramètres correspondantes), y compris le cas où le mouvement est nul, qui a permis lors du cycle précédent (c'est-à-dire à partir de l'image P(t-2)) de connaître les mouvements qui conduisent à l'image P(t-1) ;
(d) les données résultant de la mise en oeuvre de la technique BMA (décrite plus haut) entre les images P(t-1) et P(t), à savoir un vecteur de déplacement défini pour chaque pixel de P(t), et en général au pixel près (ou éventuellement à un demi-pixel près).

Pour chaque région $R_i$ de P(t), quatre hypothèses de mouvement par rapport à l'image précédente ont été, ici, successivement prises en considération, compte tenu de leur complémentarité et de la simplicité à les formuler au vu des informations disponibles :

(1) le mouvement de la région $R_i$ est nul ;

(2) le label i considéré existait déjà dans S(t-1), et le mouvement de la région est uniquement une translation parallèle au plan image : il suffit alors de calculer les coordonnées du centre de gravité du label i dans S(t-1) et S(t), puis la différence entre ces coordonnées, qui donne le vecteur de déplacement ;

(3) le label i considéré existait déjà dans S(t-1) : j désignant tout label voisin de i dans S(t-1) et les données $M_i(t-1)$ et $M_j(t-1)$ étant exprimées dans le repère local associé à i, on recherche tous les labels j voisins de i dans S(t-1), puis on lit la donnée $M_j(t)$ correspondante (type de mouvement et valeurs de paramètres correspondantes, converties dans ce repère local), et l'on choisit le meilleur mouvement entre le label i et ses labels voisins ;

(4) le mouvement retenu est celui qui correspond à la meilleure approximation du champ de vecteurs de déplacement résultant d'une adaptation de la technique BMA par région (seuls les déplacements calculés sur des blocs plus qu'à moitié inclus dans la région i considérée étant pris en compte), ladite adaptation consistant en ce que l'on prévoit une suite d'estimations de mouvement translationnel sur des blocs de taille variable et de relaxations, de manière à déterminer ensuite une approximation du champ de vecteurs par un modèle plus complexe, à l'aide d'une technique de régression (cette méthode d' adaptation de polynôme sur un ensemble de valeurs est similaire à la méthode d'approximation polynomiale décrite par exemple pour le codage d'images texturées dans l'article "Coding of arbitrarily shaped image segments based on a generalized orthogonal transform" de M. Gilge, T. Engelhardt et R. Mehlan, paru dans la revue "Signal Processing : Image Communication, vol. 1, n° 2, octobre 1989, pp. 153-180, sans que cet exemple soit limitatif).

La deuxième sous-étape (B) de l'étape 10 d'initialisation INIT consiste à prédire à partir de P(t-1) la région correspondante dans P(t), compte tenu de chacune des hypothèses de mouvement effectuées au cours de la sous-étape (A), puis à calculer à chaque fois l'erreur de prédiction sur la région. Le principe de la prédiction est le suivant : il s'agit, connaissant P(t-1), S(t) et $M_i(t)$, de déterminer en une position X,Y d'un pixel la valeur de luminance prédite dans l'image P(t). La description détaillée de la prédiction sera donnée plus loin, dans la partie consacrée au raffinement, pour l'estimation définitive des paramètres de mouvement.

Enfin, la troisième sous-étape (C) de l'étape 10 d'initialisation INIT consiste à comparer les erreurs de prédiction calculées sur une région et à conserver comme mouvement initial de la région celui auquel correspond la plus faible des erreurs de prédiction. Le processus est repris pour chaque région, et la première étape 10 d'initialisation est achevée lorsque, pour toutes les régions de P(t), les paramètres de mouvement ont été ainsi ajustés. L'ensemble des paramètres initiaux ainsi déterminés pour une région $R_i$ est désigné sur la figure 3 par la référence $M_{12}^i (t)$.

La deuxième étape 20 de traitement intermédiaire a pour objectif de faciliter l'estimation des paramètres de mouvement définitifs qui seront obtenus au terme de la troisième et dernière étape. Un traitement essentiel pour atteindre cet objectif, sans que ce soit le seul possible, est de modifier le signal de luminance pour le rapprocher de l'idéal théorique (une fonction du premier ordre) c'est-à-dire pour le rendre plus en mesure de vérifier l'hypothèse mathématique requise par la théorie pour qu'il y ait convergence du processus d'estimation. Ce traitement consiste en un filtrage de P(t-1) et de P(t), par exemple en utilisant un filtre gaussien isotropique dans les quatre directions du plan (S(t-1), S(t), $M_i(t)$ ne sont, eux, pas modifiés). Ce choix de filtre assure un très bon compromis entre un lissage des contours, utile pour simplifier le signal de luminance dans l'image et faciliter la convergence en évitant autant que possible les minima locaux, et le maintien d'une localisation suffisante de ces contours dans l'image (il est souhaitable de conserver assez de détails de l'image pour que la précision sur le mouvement estimé soit suffisante). Les images filtrées sont désignées sur la figure 3 par les références P'(t-1) et P'(t). L'ensemble des paramètres de mouvement disponibles après ce prétraitement réalisé au cours de l'étape 20 est désigné sur la figure 3 par la référence $M_{23}^i (t)$.

La troisième étape 30 de raffinement des paramètres de mouvement, qui est itérative, a pour objectif d'effectuer l'estimation définitive des paramètres de mouvement pour la région concernée. Le processus itératif mis en oeuvre au cours de cette étape prend fin sur un critère déterminé, par exemple lorsqu'un nombre d'itérations fixé à l'avance est atteint (on peut aussi proposer d'autres critères, tel qu'un arrêt des itérations lorsqu'une qualité suffisante lors de la compensation de mouvement que permet l'estimation de mouvement préalable est atteinte ou lorsque l'amélioration apportée par la nouvelle itération deviendrait négligeable, ou même une combinaison de plusieurs critères).

On rappellera tout d'abord que l'on cherche, pour chaque région de P(t), à déterminer un vecteur (Dx, Dy) tel que, pour tout point de la région, L(x, y, t) = L (x - Dx, y - Dy, t-1) , Dx et Dy étant des polynômes de degré fonction du type de mouvement pour la région considérée. L'égalité de ces deux termes L(.) n'est réalisable que de façon plus ou moins approchée selon le degré de qualité de l'estimation de mouvement, mais, pour que cette approximation soit la plus satisfaisante possible, le critère retenu est celui de la détermination de la plus petite erreur quadratique : il s'agit de rendre minimale la somme des carrés des erreurs de prédiction sur les pixels de la région, c'est-à-dire l'expression suivante :

$$\Sigma \ (L \ (x,y,t) - L \ (x-Dx,y-Dy,t-1))^2 \qquad\qquad (1)$$

pour x et y prenant toutes les valeurs correspondant à des coordonnées de pixels compris dans la région $R_i$ considérée. Cette expression (1) est notée de façon plus abrégée de la façon suivante (DFD = "Displaced Frame Difference") :

$$\Sigma_{x,y}(DFD(x,y,Dx,Dy))^2 \qquad (2)$$

On sait qu'une telle opération mathématique de minimisation (de l'expression (2)) peut être effectuée notamment par la méthode de Gauss-Newton, pour laquelle on pose $Dx = (Dx_o + dx)$ et $Dy = (Dy_o + dy)$, avec dx et dy très faibles par rapport à $Dx_o$ et $Dy_o$ respectivement. En procédant à un développement du premier ordre, il vient :

$$L(x-Dx,y-Dy,t-1) = L(x-Dx_o, y-Dy_o, t-1) - dx \left(\frac{\partial}{\partial x} L(x-Dx_o, y-Dy_o, t-1)\right) - dy \left(\frac{\partial}{\partial y} L(x-Dx_o, y-Dy_o, t-1)\right) \qquad (3)$$

L'expression (1) à minimiser devient donc :

$$\Sigma_{x,y}[DFD(x,y,Dx_o,Dy_o) - dx \left(\frac{\partial}{\partial x} L(x-Dx_o, y-Dy_o, t-1)\right) - dy \left(\frac{\partial}{\partial y} L(x-Dx_o, y-Dy_o, t-1)\right)]^2 \qquad (4)$$

Dans cette expression (4), on annule les dérivées par rapport à chacun des coefficients de dx et de dy afin de caractériser le minimum de cette expression par rapport aux paramètres de mouvement, ce qui conduit à un ensemble de n équations à n inconnues.

Les solutions de cet ensemble d'équations sont les variations des paramètres de mouvement menant à la plus petite erreur quadratique. Pour le résoudre, on l'exprime sous forme matricielle :

$$[A].[x] = [B] \qquad (5)$$

Le vecteur x représente les paramètres recherchés, et les termes des matrices dépendent des coordonnées des pixels de l'image courante, des gradients respectivement horizontal et vertical aux précédentes positions des pixels (dans l'image précédente), et des valeurs de luminance en ces positions dans les images courante et précédente. Pour chaque région $R_i$ de S(t) et à chaque itération, il faut donc construire les matrices A et B, inverser la matrice A, et multiplier la matrice inverse ainsi obtenue par la matrice B pour obtenir le vecteur solution x : on peut alors mettre à jour l'information de mouvement (pour la région $R_i$) par addition des composantes de ce vecteur solution x à la précédente expression de cette information de mouvement.

Pour la construction de la matrice A, il faut calculer d'une part des valeurs de luminance en des points de l'image précédente correspondant aux positions précédentes de points de l'image courante dont on connaît le mouvement et les positions dans cette image courante - c'est l'opération de prédiction décrite ci-dessous -, et d'autre part des valeurs de gradient horizontal et de gradient vertical en des points similaires. Les calculs doivent être effectués sur des valeurs de paramètres exprimées dans leur repère local (c'est-à-dire liées à la région). Pour chacune des régions, on stocke deux ensembles de paramètres, d'une part les paramètres en cours d'estimation, en train de converger, que l'on notera $M_i^{CV}(t)$, et d'autre part les paramètres donnant les meilleurs résultats sur la région, que l'on notera $M_i^f(t)$. Au départ de l'étape 30 de raffinement, ces deux mouvements sont égaux au mouvement initial ($M_{12}^i(t)$ sur la figure 3) provenant de l'initialisation des paramètres traités. Ensuite $M_i^{CV}(t)$ est raffiné de manière itérative et remplacé à la fin de chaque itération par $M_i^f(t)$ qui correspond au mouvement donnant sur la région étudiée les meilleurs résultats parmi les mouvements suivants : soit les paramètres $M_i^{CV}(t)$ tout juste calculés sur la région courante, soit les paramètres $M_i^{CV}(t)$ des régions j voisines de i dans S(t), ces mouvements étant reconvertis dans le repère local correspondant à la région i. Enfin, ce mouvement retenu peut donner lieu à une propagation vers les régions voisines : pour ces régions voisines, on reprend la recherche de la plus faible erreur de prédiction sur la base de ce mouvement, qui est sélectionné s'il conduit effectivement à une plus petite erreur de prédiction, et ainsi de suite. En sortie de chaque itération de l'étape de raffinement, on retourne pour chaque région i de S(t) l'information de mouvement déterminée vers l'entrée de l'étape 20 (paramètres désignés par $M_{32}^i(t)$ sur la figure 3).

L'opération de prédiction nécessaire à la construction de la matrice A va être maintenant décrite. Soit un pixel de coordonnées (X, Y), la prédiction permet de déterminer la valeur de luminance prédite en cette position à l'instant t, notée L(X, Y, t), à partir de S(t), P(t-1) et M(t). Cette opération effectuée en chaque point de l'image se décompose en deux étapes :

(a) calcul des coordonnées non entières de ce pixel à l'instant (t-1) :

- recherche du label i de la région à laquelle le pixel appartient, en lisant l'image de labels S(t) à la position (X, Y) ;

- pour ce pixel, sélection de ses informations de mouvement (type du mouvement et valeur des paramètres) par lecture de $M_i(t)$ pour ce label :
- calcul du déplacement (Dx, Dy) du pixel en fonction de ses coordonnées, du type de mouvement et des valeurs des paramètres de sa région (par exemple, dans le cas d'un mouvement affine, pour lequel on a 6 paramètres, on a : (Dx, Dy) = ($a_1$+$a_2$.X+$a_3$.Y, $a_4$+$a_5$.X+$a_6$.Y) si les paramètres de mouvement étaient exprimés par rapport au repère global, ou bien (dx, dy) = (a1+a2.x+a3.y, a4+a5.x+a6.y) si les paramètres de mouvement étaient exprimés par rapport au repère local à leur région), ledit déplacement permettant alors, pour ce pixel, d'en déduire ses coordonnées à (t-1) : (X-Dx, Y-Dy) (si ces coordonnées sont hors de l'image, on prend comme coordonnées celles du point le plus proche appartenant à l'image, mais les coordonnées trouvées ne sont pas nécessairement des valeurs entières, puisque les paramètres ne le sont pas, et il faut donc, pour en déduire la luminance en ce point, procéder à une interpolation) ;

(b) calcul de la luminance en ces coordonnées dans P(t-1) : la luminance est interpolée, dans le cas présent, en utilisant un filtre monodimensionnel bicubique de longueur 5 avec une précision au 16ème de pixel (l'interpolation est faite en horizontal et en vertical avec ce même filtre, avec, dans le cas de points en bordure d'image, une opération dite de mirroring sur les bords de l'image, pour obtenir deux valeurs de luminance dont on garde la valeur moyenne).

Pour les calculs de gradient, il faut, de même que pour la luminance, pouvoir interpoler leurs valeurs. Pour assurer la cohérence de cette opération avec l' interpolation utilisée lors de la prédiction, le filtre utilisé est la dérivée de celui utilisé pour la luminance, de longueur 5, avec une précision au 32ème de pixel. La technique de l'interpolation est la même que pour la luminance, hormis le fait que les valeurs résultant des filtrages horizontaux et verticaux sont utilisées indépendamment et donc ne sont pas moyennées (éventuellement, on effectue la même opération de mirroring que pour la luminance).

En théorie, la matrice A doit être construite à l'aide d'une somme de termes sur tous les points de la région. Or certains points peuvent être facteur d'erreur (appartenance à un petit objet au mouvement parasite, à une zone découverte...). Une contrainte simple de sélection des points est alors de ne garder que les points (x, y) dont le mouvement actuellement estimé est tel que S(x,y,t) = S(x-Dx, y-Dy, t-1) . Cette contrainte est d'autant plus efficace que la segmentation est plus cohérente avec le contenu de l'image.

Une fois la matrice A construite, on teste si elle est singulière ou non. Si elle ne l'est pas, on l'inverse par la méthode dite de Householder. Si elle l'est, on ne raffine pas le mouvement, les paramètres de mouvement (l'information $M_i^{CV}$) restent inchangés à l'issue de cette itération, et on passe directement à la sélection du meilleur mouvement. La région est prédite en utilisant l'information $M_i^{CV}(t)$ qui vient d'être fournie par l'étape de raffinement, et, pour toute région j voisine de i dans S(t), l'information $M_j(t)$ exprimée dans le repère local à i. L'erreur de prédiction sur la région est calculée à chaque fois. Si toutes les erreurs sont plus élevées que celle correspondant à la précédente information $M_i^f(t)$, ce meilleur mouvement reste inchangé. Sinon, le mouvement engendrant la plus petite erreur de prédiction est en définitive retenu, la nouvelle information de mouvement correspondante étant notée $M_i^f(t)$. Comme on l'a vu ci-dessus, une propagation contrôlée du mouvement retenu est possible. En effet, pour toute région $R_j$ voisine de $R_i$, l'erreur de prédiction sur la région est calculée à partir des paramètres $M_i^f(t)$, et $M_j^f(t)$ est remplacé par $M_i^f(t)$ si cette erreur est plus petite que l'erreur de prédiction obtenue à partir des $M_j(t)$.

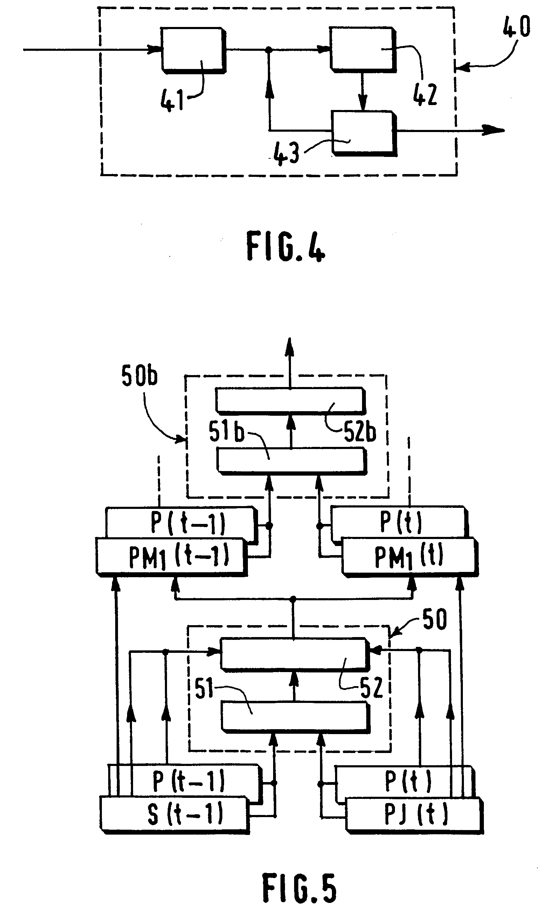

Le procédé qui vient d'être décrit peut être mis en oeuvre dans un dispositif 40 d'estimation de mouvement représenté sur la figure 4 et qui comprend ici un premier étage 41 d'initialisation des paramètres de mouvement de chaque région de l'image courante, pour la mise en oeuvre de la première étape 10 d'initialisation par sélection d'hypothèses de mouvement et choix, pour chaque région, de celui des mouvements pour lequel la somme des carrés des erreurs de prédiction sur les pixels de la région est minimale, puis un deuxième étage 42 de traitement intermédiaire, pour la mise en oeuvre de la deuxième étape 20, et un troisième étage 43 de raffinement des paramètres de mouvement, pour la mise en oeuvre de la troisième étape 30 par détermination approchée du vecteur (Dx, Dy) attaché à chaque région. Ces deuxième et troisième étages 42 et 43 sont organisés en boucle selon un processus itératif jusqu'à arrêt de celui-ci en fonction d'un critère déterminé (le traitement intermédiaire comprend ici un filtrage gaussien isotropique destiné à accélérer la convergence de ce processus itératif).

Une application particulièrement importante de ce dispositif d'estimation de mouvement consiste à en prévoir la mise en place dans un système de codage d'images segmentées tel que celui décrit dans la demande de brevet européen n° 95402389.1 déposée le 25 octobre 1995. Sans qu'il soit nécessaire de rappeler toutes les particularités du système décrit dans cette demande, il est cependant utile d'en définir la caractéristique essentielle. Plus précisément, ce système, destiné au codage d'images segmentées -ou partitions-correspondant à une séquence d'images initiales dans lesquelles lesdites partitions délimitent des contours et donc des régions identifiées par des labels associés à celles-ci, comprend, avant le codage lui-même, un ensemble de moyens lui permettant d'engendrer, pour chacune des partitions successives dite alors partition courante, une partition dite, elle, optimale et définie selon un processus spécifique à partir de ladite partition courante.

Cette partition optimale est, en effet, composée de façon classique de régions juxtaposées, mais la provenance de ces régions est originale : il s'agit soit de régions extraites directement d'une partition dite principale, ou partition projetée, déterminée par estimation et compensation de mouvement d'une partition précédant la partition courante, soit de régions extraites de partitions additionnelles créées par fusion ou au contraire par re-segmentation de régions de ladite partition principale. Est ainsi constitué une sorte d'arbre de partitions à plusieurs niveaux de régions, offrant tout un ensemble de régions parmi lesquelles, par un processus de décisions, est choisi, pour chaque partition courante, le jeu final de régions constituant la partition optimale à coder.

Pour réaliser dans ce système de codage la fusion éventuelle de régions, celui-ci comprend donc au moins un circuit 50 de fusion de régions composé, comme illustré sur la figure 5, d'un dispositif d'estimation de mouvement 51 et d'un dispositif 52 dit de proposition de fusion. Le dispositif 51, qui est du type décrit ci-dessus (dispositif 40), reçoit d'une part deux imâges texturées d'origine P(t-1) et P(t), dites respectivement image précédente et image courante, et d'autre part l'image segmentée ou partition S(t-1) qui correspond à P(t-1), ainsi que la partition projetée, notée PJ(t), et calcule les paramètres de mouvement de cette partition PJ(t), décrivant le mouvement de chaque région de PJ(t) entre les instants (t-1) et t.

Lorsque les paramètres de mouvement de PJ(t) sont connus, on peut alors effectuer dans le dispositif 52 une estimation du coût de fusion de régions voisines. Pour chaque paire possible de régions voisines, ce coût de fusion est calculé et l'on sélectionne les couples de régions qui présentent les plus faibles coûts de fusion. Par exemple, selon un premier critère de fusion, deux régions voisines sont regroupées (en une seule) si le coût de codage de l'erreur de prédiction correspondant à la situation où ces deux régions ne sont plus considérées que comme une seule (c'est-à-dire lorsqu'elles sont compensées en mouvement à l'aide du même jeu de paramètres de mouvement) est plus faible que le coût de codage du contour qui constitue la frontière entre elles deux. Selon un autre critère, utilisable si la méthode de codage n'est pas connue à l'avance, c'est l'erreur de compensation qui peut être prise en compte : le coût considéré est la variation d'erreur (de compensation) quadratique moyenne lorsque les deux régions concernées sont compensées séparément. Une proposition de fusion de ces deux régions est alors éventuellement émise, conduisant, dans le cas de fusion, à disposer désormais de nouvelles partitions $PM_1(t-1)$ et $PM_1(t)$.

Ces deux partitions $PM_1(t-1)$ et $PM_1(t)$ constituent avec les images d'origine P(t-1) et P(t) les signaux envoyés, pour une éventuelle répétition du processus d'estimation de mouvement et de proposition de fusion, vers un deuxième circuit de fusion de régions 50b (comprenant alors un deuxième dispositif d'estimation de mouvement 51b et un deuxième dispositif de proposition de fusion 52b), et ainsi de suite pour d'autres éventuels niveaux de fusion. L'ensemble de ces niveaux de fusion est alors associé aux niveaux similaires obtenus par re-segmentation pour constituer l'arbre de partitions dans lequel sont choisies les régions composant la partition optimale.

Bien entendu, la présente invention n'est pas limitée aux exemples de réalisation décrits, à partir desquelles des variantes peuvent être proposées sans sortir pour cela du domaine de l'invention.

Par exemple, dans la première étape 10 d'initialisation des paramètres de mouvement, il est possible de choisir d'autres hypothèses de mouvement que celles qui ont été prises en considération, ou d'en choisir un plus grand nombre avant d'opérer la sélection, comme mouvement initial de la région $R_i$ considérée, de celui qui engendre la plus petite erreur de prédiction.

On peut aussi, au cours de la deuxième étape 20 de traitement intermédiaire, accélérer le processus d'estimation des paramètres par un sous-échantillonnage, ou bien encore, après avoir, par le filtrage proposé plus haut, facilité la convergence de ce processus, éviter cependant que celle-ci ne s'arrête sur un minimum local, en procédant à une analyse hiérarchique des images. Le principe de l'estimation reste alors le même, mais les différences de mise en oeuvre (quoique celle-ci soit simplifiée du fait qu'on sait être alors plus proche du mouvement à estimer) sont les suivantes :

- initialisation : on tes te sur chaque région l'hypothèse "mouvement nul" ou l'hypothèse "champ de vecteurs" (l'une et l'autre décrites plus haut), puis l'on teste également, dans le cas où S(t) résulte d'une nouvelle segmentation, les mouvements de la région "parent" de la région considérée et des régions parents des régions voisines de cette région considérée, ou bien, dans le cas où S(t) résulte d'une fusion de régions, les mouvements de toutes les régions "enfant" de la région considérée et des régions enfants des régions voisines de cette région considérée,
- prétraitement : pas de filtrage ;
- raffinement : il est effectué sur les images non filtrées.

Par ailleurs, au cours de la troisième étape 30 de raffinement des paramètres de mouvement, les calculs de raffinement sont effectués dans un repère local à la région considérée, dont le centre est le centre du rectangle horizontal circonscrit à la région, dont les axes sont parallèles aux bords de l'image, et dont les unités en x et y sont les dimensions maximales de la région dans ces directions, divisées par un coefficient de normalisation. La figure 6 montre un tel exemple de repère local dans le cas d'un coefficient de normalisation égal à 2, pour une région ayant la forme ici représentée. Un exemple de changement de repère sur la composante horizontale d'un mouvement affine est ici explicité pour une région de dimensions maximales horizontales et verticales Lx et Ly, avec un repère local associé dont le centre a des coordonnées (Xc, Yc) par rapport au repère global lié à l'image et dont la composante horizontale du mouvement exprimée en local est : $Dx = a + b.x + c.y$. Si N est le coefficient de normalisation, alors les paramètres exprimés dans le repère global lié à l'image deviennent A, B et C tels que, quels que soient X et Y dans cette région R :

$$a+b.x+c.y = a+b.\frac{X-Xc}{\frac{Lx}{N}}+c.\frac{Y-Yc}{\frac{Ly}{N}} = A+B.X+C.Y$$

ou encore :

$$A = a-(b.\frac{N}{Lx}.Xc)-(c.\frac{N}{Ly}.Yc)$$

$$B = b.\frac{N}{Lx}$$

$$C = c.\frac{N}{Ly}$$

D'autres variantes de réalisation sont encore possibles, concernant par exemple les filtres bicubiques utilisés pour l'opération de prédiction, qui sont à pas fixes, mais pourraient être à pas variables, ou bien concernant, lors de la construction de la matrice A, la mise en place éventuelle d'une pondération des contributions des différents pixels d'une région, afin de ne pas prendre en compte les pixels soumis au bruit ou à des phénomènes d'occlusion et de donner plus de poids aux points où la variation de luminance est induite par le mouvement recherché. On notera aussi que la description précédente ne correspond qu'à des mises en oeuvre particulières de l'invention et que par exemple une réalisation incluant notamment un microprocesseur qui assure l'exécution de séries d'instructions correspondant aux fonctions de certains ou de la totalité des éléments prévus dans ces exemples de réalisation précédents est possible et tout à fait conforme à l'invention.

## Revendications

1. Procédé d'estimation de mouvement entre images formant une séquence P(t-n), P(t-n+1),..., P(t-2), P(t-1), P(t),..., à laquelle correspond une séquence S(t-n), S(t-n+1),..., S(t-2), S(t-1), S(t),..., d'images segmentées ou partitions composées de l régions $R_i$ identifiées par des labels, ledit procédé comprenant successivement, pour délivrer par région $R_i$ et sous la forme d'un vecteur de mouvement défini par des paramètres de mouvement une information $M_i(t)$ représentative du mouvement de l'image courante P(t) par rapport à une image précédente P(t-1), les trois opérations suivantes, effectuées chacune pour chaque région de l'image courante :

   (1) une première étape d'initialisation des paramètres de mouvement de chacune des régions $R_i$ de l'image courante P(t), en fonction des images avant segmentation P(t-1) et P(t), des images segmentées S(t-1) et S(t), et de l'information de mouvement $M_i(t-1)$ estimée pour la précédente image courante P(t-1) par une précédente mise en oeuvre du procédé ;
   (2) une deuxième étape de traitement intermédiaire des images sur lesquelles est effectuée l'estimation de mouvement et des paramètres de ce mouvement, et une troisième étape de raffinement de paramètres de mouvement, pour la détermination définitive, pour tous les points d'image de chacune desdites régions $R_i$, desdits paramètres sous la forme d'un vecteur (Dx, Dy) tel que, pour tout point de coordonnées (x,y) de la région, $L(x,y,t) = L(x-Dx, y-Dy, t-1)$, L(.) désignant la luminance ou un signal vidéo plus complexe tel qu'une combinaison des signaux de luminance et de chrominance, et Dx, Dy étant des polynômes de degré lié au type de mouvement de la région ;
   (3) la reprise itérative desdites deuxième et troisième étapes de traitement intermédiaire et de raffinement, jusqu'à arrêt de ce processus itératif en fonction d'au moins un critère déterminé, pour disposer finalement de l informations de mouvement $M_i(t)$.

2. Procédé selon la revendication 1, dans lequel ladite première étape d'initialisation des paramètres de mouvement comprend les sous-étapes suivantes :

   (A) une première sous-étape de définition d'hypothèses de mouvement pour chaque région $R_i$ considérée ;
   (B) une deuxième sous-étape de prédiction, à partir de l'image P(t-1), de la région correspondant à chaque

région $R_i$ dans l'image P(t) compte tenu de chacune des hypothèses de mouvement précédentes, et de calcul des erreurs de prédiction correspondantes ;

(C) une troisième sous-étape de comparaison desdites erreurs de prédiction calculées pour chaque région $R_i$ considérée et de sélection, comme mouvement initial de cette région, de celle des hypothèses de mouvement à laquelle correspond la plus faible des erreurs de prédiction.

3. Procédé selon la revendication 2, dans lequel ladite deuxième étape de traitement intermédiaire comprend un prétraitement de filtrage à l'aide d'un filtre gaussien isotropique.

4. Procédé selon la revendication 2, dans lequel ladite troisième étape de raffinement comprend, pour la détermination du vecteur Dx, Dy attaché à chaque région $R_i$ considérée, une opération de minimisation de la somme des carrés des erreurs de prédiction sur les points d'image de ladite région $R_i$ ou sur un sous-ensemble de ces points, cette somme étant notée :

$$\Sigma_{(x,y)} \, (L(x,y,t) - L(x-Dx, \, y-Dy, \, t-1))^2$$

5. Procédé selon la revendication 4, dans lequel ladite minimisation est effectuée par la méthode approchée dite de Gauss-Newton, en effectuant un développement limité au premier ordre de ladite somme après remplacement de Dx et Dy par $(Dx_o + dx)$ et $(Dy_o + dy)$ respectivement, en annulant les dérivées dudit développement limité par rapport à chacun des coefficients de dx et de dy, et en retenant comme valeurs des variations des paramètres de mouvement menant à la plus petite erreur quadratique les solutions de l'ensemble de n équations à n inconnues obtenu à la suite de ces opérations.

6. Procédé selon l'une des revendications 2 à 5, dans lequel est prévue, à la suite desdites trois opérations d'initialisation, de traitement intermédiaire et de raffinement, une opération supplémentaire dite de propagation contrôlée vers les régions voisines de chaque région $R_i$, selon laquelle sont reprises, pour chacune desdites régions $R_i$ :

(a) d'une part une nouvelle sous-étape de prédiction, à partir de l'image P(t-1), de chacune desdites régions voisines dans l'image P(t) compte tenu d'une hypothèse de mouvement, dans ces régions, correspondant à celle qui est associée aux paramètres de mouvement résultant de ladite détermination définitive, et de calcul de l'erreur de prédiction additionnelle correspondante ;
(b) d'autre part une sous-étape de comparaison de ladite erreur de prédiction additionnelle et de l'erreur de prédiction associée à l'hypothèse de mouvement retenue comme mouvement initial de la région voisine considérée et de sélection, comme mouvement de chacune desdites régions voisines, de celui auquel correspond la plus faible de ces deux erreurs de prédiction.

7. Dispositif d'estimation de mouvement entre images formant une séquence P(t-n), P(t-n+1),..., P(t-2), P(t-1), P(t),..., à laquelle correspond une séquence S(t-n), S(t-n+1),..., S(t-2), S(t-1), S(t),..., d'images segmentées ou partitions composées de I régions $R_i$ identifiées par des labels, caractérisé en ce qu'il comprend successivement, pour délivrer par région $R_i$ et sous la forme d'un vecteur de mouvement défini par des paramètres de mouvement une information $M_i(t)$ représentative du mouvement de l'image courante P(t) par rapport à une image précédente P(t-1), les trois étages suivants, à savoir un premier étage d'initialisation des paramètres de mouvement de chaque région de l'image courante, par sélection d'hypothèses de mouvement et choix, pour chaque région, de celui des mouvements pour lequel la somme des carrés des erreurs de prédiction sur les points d'image de la région est minimale; un deuxième étage de traitement intermédiaire, et un troisième étage de raffinement des paramètres de mouvement par détermination approchée du vecteur (Dx, Dy) attaché à chaque région, lesdits deuxième et troisième étages étant organisés en boucle selon un processus itératif jusqu'à arrêt de celui-ci en fonction d'un critère déterminé.

8. Dispositif selon la revendication 7, caractérisé en ce que ledit traitement intermédiaire comprend un filtrage gaussien isotropique destiné à accélérer la convergence dudit processus itératif.

9. Dispositif selon l'une des revendications 7 et 8, caractérisé en ce que lesdites hypothèses de mouvement sont au nombre de quatre, à savoir : mouvement nul, mouvement de translation équivalent à celui du centre de gravité de la région, mouvement évalué comme le meilleur entre ce label et ses voisins dans la partition précédente, et mouvement estimé par mise en oeuvre d'un processus de correspondance par bloc dit BMA.

10. Système de codage d'images segmentées, ou partitions, correspondant à une séquence d'images initiales et déterminant dans lesdites images des contours et des régions délimitées par ceux-ci et identifiées par des labels associés, ledit système comprenant des moyens pour engendrer, pour chaque partition successive dite partition courante, des signaux codés correspondant à une partition dite optimale et composée soit de régions extraites d'une partition dite principale et déterminée directement par estimation et compensation de mouvement d'une partition précédant ladite partition courante, soit de régions extraites de partitions additionnelles créées par fusion ou au contraire par re-segmentation de régions de ladite partition principale, caractérisé en ce qu'il comprend, en vue de ladite fusion éventuelle, au moins un circuit de fusion de régions composé d'un dispositif d'estimation de mouvement selon l'une des revendications 7 à 9 et d'un dispositif de proposition de fusion des régions concernées.

11. Système de codage selon la revendication 10, caractérisé en ce qu'il comprend plusieurs circuits de fusion de régions en série pour constituer autant de niveaux de partition distincts dits supérieurs, lesdits niveaux supérieurs étant associés à ladite partition principale et à des niveaux inférieurs déterminés de façon similaire par re-segmentations successives pour constituer un arbre de partitions offrant un ensemble complet de régions parmi lesquelles est choisi, pour chaque partition courante, le jeu final de régions constituant ladite partition optimale à coder.

FIG.1

FIG.2

FIG.3

FIG.6

FIG.4

FIG.5

**EP 0 771 115 A1**

Office européen
des brevets

**RAPPORT DE RECHERCHE EUROPEENNE**

Numero de la demande

EP 96 20 2884

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | IEEE TRANSACTIONS ON CIRCUITS AND SYSTEMS FOR VIDEO TECHNOLOGY, vol. 4, no. 3, 1 Juin 1994, pages 357-364, XP000460880 CICCONI P ET AL: "EFFICIENT REGION-BASED MOTION ESTIMATION AND SYMMETRY ORIENTED SEGMENTATION FOR IMAGE SEQUENCE CODING" | 1,2,4,6, 7,10 | H04N7/26 H04N7/36 |
| A | * page 359, colonne 2, ligne 39 - page 362, colonne 2, ligne 4; figures 4-6 *<br>--- | 9 | |
| P,X | EP-A-0 691 789 (AT & T CORP) 10 Janvier 1996 * colonne 6, ligne 9 - colonne 14, ligne 41; figures 3-9 * * colonne 16, ligne 43 - colonne 18, ligne 25; figure 12 *<br>--- | 1,2,4-7, 9,10 | |
| P,X | PROC. SPIE - INT. SOC. OPT. ENG. (USA), PROCEEDINGS OF THE SPIE - THE INTERNATIONAL SOCIETY FOR OPTICAL ENGINEERING, 1996, SPIE-INT. SOC. OPT. ENG, USA, vol. 2727, 17 Mars 1996, pages 1152-1163, XP000607387 CHEONG C K: "Structural motion segmentation for compact image sequence representation" | 1,7,8 | **DOMAINES TECHNIQUES RECHERCHES (Int.Cl.6)**<br><br>H04N |
| A | * page 1153, ligne 16 - page 1154, ligne 7 *<br><br>* page 1154, ligne 36 - page 1159, ligne 11 *<br>--- | 2-6,10 | |
| A | DE-A-41 38 517 (UNIV HANNOVER) 27 Mai 1993 * colonne 5, ligne 8 - colonne 9, ligne 8; figures 3-7 *<br>---<br><br>-/-- | 1-4,7,8 | |

Le présent rapport a été établi pour toutes les revendications

| Lieu de la recherche | Date d'achèvement de la recherche | Examinateur |
|---|---|---|
| LA HAYE | 21 Janvier 1997 | De Paepe, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numero de la demande

EP 96 20 2884

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON IMAGE PROCESSING, vol. 3, no. 5, pages 589-609, XP000476834 HAIBO LI ET AL: "IMAGE SEQUENCE CODING AT VERY LOW BITRATES: A REVIEW" * page 592, colonne 1, ligne 2 - page 593, colonne 1, ligne 6 * * page 601, colonne 1, ligne 21 - page 602, colonne 2, ligne 23 * ----- | 1,7,10 | |
| | | | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 21 Janvier 1997 | De Paepe, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)